Europäisches Patentamt

(19) European Patent Office

Office européen des brevets

(11) Publication number: **0 250 176 B1**

## EUROPEAN PATENT SPECIFICATION

(45) Date of publication of patent specification: **11.09.91** (51) Int. Cl.⁵: **G06F 15/20**

(21) Application number: **87305233.6**

(22) Date of filing: **12.06.87**

(54) **Word processing system with means to record messages from an operator relating to the text.**

(30) Priority: **13.06.86 US 873752**

(43) Date of publication of application:
**23.12.87 Bulletin 87/52**

(45) Publication of the grant of the patent:
**11.09.91 Bulletin 91/37**

(84) Designated Contracting States:
**DE FR GB IT**

(56) References cited:
**GB-A- 2 088 106**
**GB-A- 2 089 543**
**US-A- 3 936 805**

**IBM TECHNICAL DISCLOSURE BULLETIN, vol.
16, no. 2, July 1973, pages 500-503, New
York, US; P.D. WELCH: "System for integrat-
ing and collating audio and text, and for text
creation and editing"**

(73) Proprietor: **International Business Machines
Corporation
Old Orchard Road
Armonk, N.Y. 10504(US)**

(72) Inventor: **Mersiovsky, Lynda K.
2313 Spring Wagon Lane
Austin Texas 78728(US)**
Inventor: **Dafoe, Cornelia R.
7931 Mesa Trails Circle
Austin Texas 78731(US)**
Inventor: **Sprott, Charles N.
8605 Silver Ridge Drive
Austin Texas 78759(US)**
Inventor: **Kendrick, Melvin R.
1400 Clearview Loop
Round Rock Texas 78664(US)**
Inventor: **Gentry, Alice V.
Route 7, Box 7M
Leander Texas 78641(US)**

(74) Representative: **Atchley, Martin John Waldeg-
rave et al
IBM United Kingdom Limited Intellectual
Property Department Hursley Park
Winchester Hampshire SO21 2JN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a word processing system which includes means to record messages from an operator relating to the text being processed.

In word processing systems, such as those controlled by the IBM (Registered Trade Mark) DisplayWrite 3 program, it is desirable to provide some means for the system user or operator to insert instructions or messages relating to text being processed by the system. US-A-4,582,441 discloses an arrangement for providing voice prompting to a keyboard operator indicating particular information to be entered by the operator. This arrangement employs a voice synthesiser which can synthesise predetermined words in accordance with digital encoding techniques, and these synthesised words can be played back at the desired time to prompt the keyboard or display operator. Further, US-A-4,215,422 discloses an example of phrase storage capabilities in a typewriter.

One particularly useful technique in a word processing system allows the use of audio input from the user to issue instructions, usually in relation to text being displayed on a display device in the system. In such a system, it is desirable that the operator should have the ability to record an audio message in the system and that this recorded audio message may be played back in audio output form by the operator or another person.

GB-A-2 088 106 discloses a word processing system which includes means for recording audio messages relating to the text being processed. The system also includes means for marking a portion of the text being displayed on the screen to indicate that there has been recorded a message relating to that portion of the text. However, an operator might not notice the presence on the screen of the marked portion of the text.

It is suggested in the GB-A-2 088 106 that the word processing system described could include means for providing an audible sound to be used in connection with the operation of recording a message, but the system described does not include means for generating an audible signal to indicate the existence of a recorded message relating to a portion of the text being processed.

The object of the present invention is to provide a word processing system having an improved means for recording messages from an operator relating to text being processed.

The present invention, as claimed, relates to a word processing system of the type which comprises a display device for displaying text being processed, a processor for storing programs controlling the operation of the processing system and for storing representations of text being processed, and recording means for recording audio messages relating to selected portions of text being processed in the system, and means for generating an indication of the existence of a recording of one or more of the audio messages relating to text being displayed on the display device,

According to the invention the word processing system is characterised in that the recording indication generating means comprises means for displaying on the display device a text message positioned on the display device adjacent to but separated from the portion of the displayed text to which the message relates, and means for generating an audible signal.

In order that the invention may be more readily understood, an embodiment will now be described with reference to the accompanying drawings, in which:

Figs. 1A, 1B and 1C are flow charts illustrating the organisation and data flow in a word processing system as illustrated in Fig. 2 during the carrying out of the present invention, and

Fig. 2 is a block diagram of a word processing system in which the present invention can be implemented.

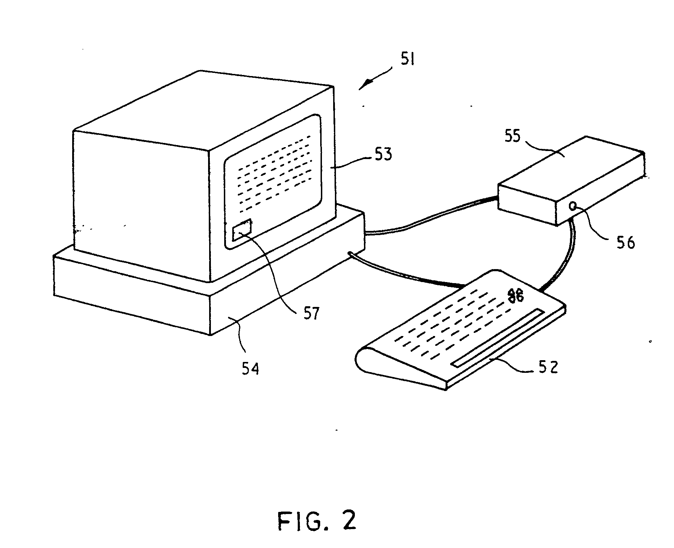

The present invention is particularly adapted for use with a word processing system of the type illustrated in Fig. 2. Such a system may be controlled by the IBM (Registered Trade Mark) DisplayWrite 3 word processing program. The system includes a personal computer 51, for example an IBM PC-AT or PC-XT computer, including a keyboard 52 and a display device 53, and operating software (program) for the system stored in a processor 54. Text to be processed can be entered by an operator using the keyboard 52 and can be stored in the processor 54. Additionally, to carry out the present invention, the system requires a Voice Communications Adaptor 55 which includes a loudspeaker/microphone 56 and stores a Voice Communications Operating Subsystem program. This is an application program interface program which is loaded and made resident in the system before the word processing program is executed.

In the word processing system illustrated in Fig. 2, audio messages, called voice notes, may be recorded by an operator through the microphone 56. Such voice notes may contain information or comments relative to portions of material (text) to be processed in the system. The existence and location of such voice notes are stored in the word processing system so that the notes may be played back by the word processing system operator through the loudspeaker 56 in conjunction with the display of the text to which the voice notes relate. The existence of each voice note is indicated in the displayed text by a suitable symbol, such as a musical note, placed adjacent the portion of the text to which the voice note relates. However, because an operator might not notice the presence on the screen of the relatively small voice note symbol or might not detect all of such symbols when a plurality of them are on the display, the present invention provides an additional indication of the voice note presence by displaying a separate message 57 on the display and providing an audible tone to alert the operator.

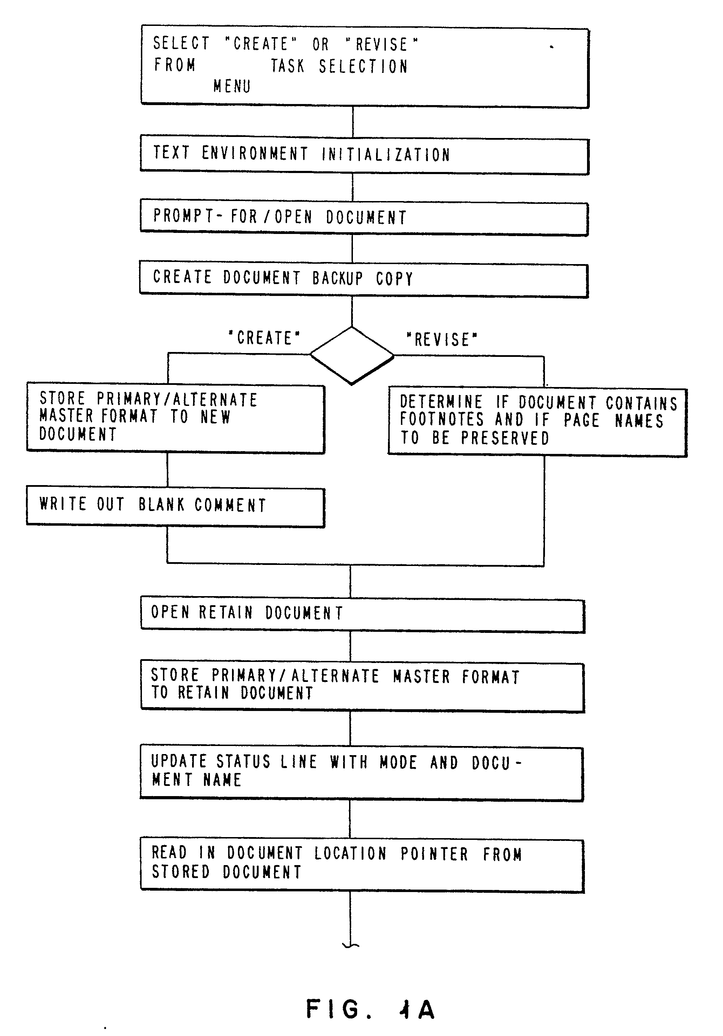

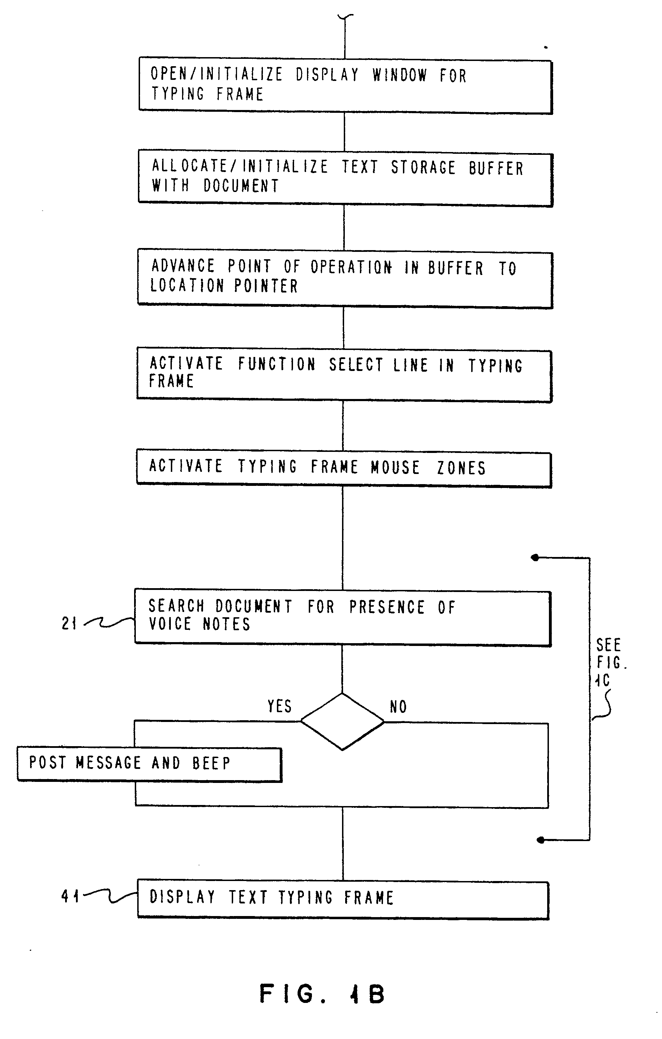

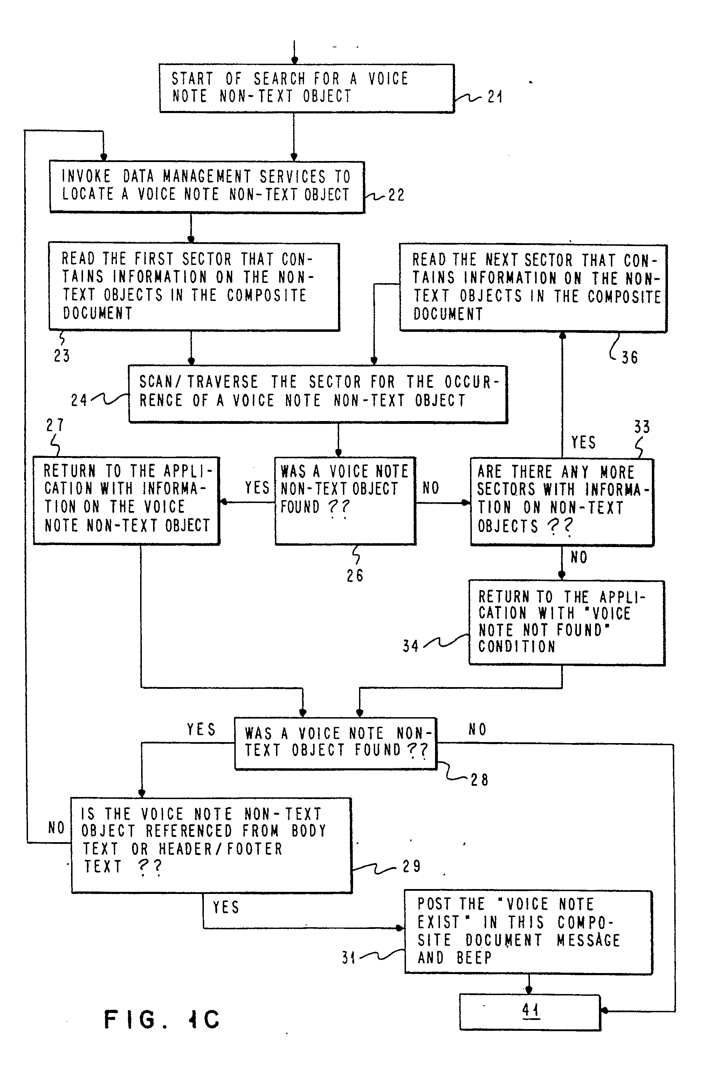

The flow charts of Figs. 1A and 1B illustrate the basic data flow involved in the operation of a word processing program such as the IBM DisplayWrite 3. These flow charts are self explanatory and, since they do not form an essential part of the present invention, will not be explained in greater detail. Fig. 1C illustrates the flow of the operation in the word processing system of Fig. 2 in searching for a stored voice note non-text object, starting with block 21 in Figs. 1B and 1C. The start of this search invokes data management services to locate a stored voice note non-text object, as indicated by block 22. This involves reading the first storage sector in the processor 54 containing information on non-text objects in the composite document, as represented by block 23, followed by a scan/traverse of that sector for the occurrence of a voice note non-text object, represented by block 24. As represented by block 26, if a voice note non-text object is found in that sector, the program returns to the Application program with information on the voice note non-text object, as represented by block 27. Block 28 indicates that if a voice note non-text object has been found, an examination is made, represented by block 29, as to whether the voice note non-text object is referenced from the body text or header/footer text. If the answer to this is affirmative, the system posts a "voice note exists" message which causes the display of this message 57 on the display screen 53, preferably along with an audible beep from loudspeaker 56, to alert the operator to the presence of one or more voice notes associated with the document text being displayed.

Returning to block 26, if no voice note non-text object was found in the storage sector scanned, an examination is made, as represented by block 33, as to whether there are any more storage sectors with stored information on non-text objects. If the answer is negative, block 34 indicates that the program returns to the Application program with a "voice note not found" condition signal. If the result of the inquiry represented by block 33 is affirmative, the program is instructed to read the next sector that contains information on the non-text objects as represented in block 36. The system then proceeds to scan through each storage sector for the occurrence of a voice note non-text object, as represented by block 24. After posting the "voice note exists" message as represented by block 31, in the case of finding a voice note in the examined material, or the "voice note not found" message in the case of no voice note being found, as represented by block 28, the program returns to block 41 in the flow chart of Fig. 1B in which the system displays the text typing frame.

Thus, the present invention provides an aid to the word processing operator to alert him to the presence in the displayed document of one or more voice notes which reference one or more audio messages for the operator relating to the displayed document.

## Claims

1.  A word processing system of the type which comprises

    a display device (53) for displaying text being processed,

    a processor (54) for storing programs controlling the operation of said processing system and for storing representations of text being processed,

    recording means (55, 56) for recording audio messages relating to selected portions of text being processed in said system, and

    means for generating an indication of the existence of a recording of one or more of said audio messages relating to text being displayed on said display device,

    characterised in that said recording indication generating means comprises

    means for displaying on said display device a text message (57) positioned on said display device adjacent to but separated from the portion of the displayed text to which the message relates, and

    means (56) for generating an audible signal.

## Revendications

1.  Système de traitement de texte du type qui comprend:

    un dispositif d'affichage (53) pour afficher un texte en cours de traitement,

    un processeur (54) pour emmagasiner des programmes contrôlant le fonctionnement dudit système de traitement et pour emmagasiner des représentations du texte en cours de traitement ,

    des moyens d'enregistrement (55, 56) pour enregistrer des messages sonores relatifs aux portions sélectionnées du texte en cours de traitement dans ledit système, et

des moyens pour engendrer une indication de l'existence d'un enregistrement d'un ou de plusieurs desdits messages sonores relatifs au texte affiché sur ledit dispositif d'affichage,

caractérisé en ce que lesdits moyens générateurs d'indications d'enregistrement comprennent

des moyens pour afficher sur ledit dispositif d'affichage un message de texte (57) positionné sur ledit dispositif d'affichage en étant adjacent à la portion, quoique séparé de celle-ci, du texte affiché auquel se rapporte le message, et

des moyens (56) pour engendrer un signal audible.

**Patentansprüche**

1.  Textverarbeitungssystem der Art, die aufweist:

    eine Anzeigeeinrichtung (53) zum Anzeigen eines in Verarbeitung befindlichen Textes,

    eine Verarbeitungseinheit (54) zum Speichern von Programmen, welche das Arbeiten des Verarbeitungssystems steuern und zum Speichern von Darstellungen eines in Verarbeitung befindlichen Textes,

    Aufzeichnungsmittel (55, 56) zum Aufzeichnen akustischer Nachrichten bezüglich ausgewählter Teile eines in dem System in Verarbeitung befindlichen Textes und

    ein Mittel zum Erzeugen einer Anzeige für das Vorhandensein einer Aufzeichnung einer oder mehrerer der akustischen Nachrichten bezüglich eines auf der Anzeigeeinrichtung in Anzeige befindlichen Textes,

    dadurch gekennzeichnet, daß das Mittel zum Erzeugen einer Aufzeichnungsanzeige aufweist:

    Mittel, um auf der Anzeigeeinrichtung eine Text-Nachricht (57) anzuzeigen, die auf der Anzeigeeinrichtung benachbart zu, jedoch getrennt von dem Teil des angezeigten Textes eingestellt ist, auf den sich die Nachricht bezieht und

    Mittel (56) zum Erzeugen eines akustischen Signals.

FIG. 4A

OPEN/INITIALIZE DISPLAY WINDOW FOR
TYPING FRAME

ALLOCATE/INITIALIZE TEXT STORAGE BUFFER
WITH DOCUMENT

ADVANCE POINT OF OPERATION IN BUFFER TO
LOCATION POINTER

ACTIVATE FUNCTION SELECT LINE IN TYPING
FRAME

ACTIVATE TYPING FRAME MOUSE ZONES

21  SEARCH DOCUMENT FOR PRESENCE OF
VOICE NOTES

YES      NO

POST MESSAGE AND BEEP

SEE
FIG.
1C

41  DISPLAY TEXT TYPING FRAME

F I G.  1 B

START OF SEARCH FOR A VOICE NOTE NON-TEXT OBJECT — 21

INVOKE DATA MANAGEMENT SERVICES TO LOCATE A VOICE NOTE NON-TEXT OBJECT — 22

READ THE FIRST SECTOR THAT CONTAINS INFORMATION ON THE NON-TEXT OBJECTS IN THE COMPOSITE DOCUMENT — 23

READ THE NEXT SECTOR THAT CONTAINS INFORMATION ON THE NON-TEXT OBJECTS IN THE COMPOSITE DOCUMENT — 36

SCAN/ TRAVERSE THE SECTOR FOR THE OCCURRENCE OF A VOICE NOTE NON-TEXT OBJECT — 24

RETURN TO THE APPLICATION WITH INFORMATION ON THE VOICE NOTE NON-TEXT OBJECT — 27

WAS A VOICE NOTE NON-TEXT OBJECT FOUND ?? — 26 — YES — NO

ARE THERE ANY MORE SECTORS WITH INFORMATION ON NON-TEXT OBJECTS ?? — 33 — YES — NO

RETURN TO THE APPLICATION WITH "VOICE NOTE NOT FOUND" CONDITION — 34

WAS A VOICE NOTE NON-TEXT OBJECT FOUND ?? — 28 — YES — NO

IS THE VOICE NOTE NON-TEXT OBJECT REFERENCED FROM BODY TEXT OR HEADER/ FOOTER TEXT ?? — 29 — NO — YES

POST THE "VOICE NOTE EXIST" IN THIS COMPOSITE DOCUMENT MESSAGE AND BEEP — 31

41

FIG. 1C

FIG. 2